# EUROPEAN PATENT APPLICATION

(11) **EP 2 522 693 A1**
(43) Date of publication of application: **14.11.2012**
(21) Application number: 11165863.9
(22) Date of filing: 12.05.2011
(51) Int. Cl.: C08K 3/00, C08K 3/22, C08J 3/28, H01B 7/29, C08J 3/20

(54) **Composite material**

(71) Applicant: Lapp Engineering & Co., 6330 Cham (CH)
(72) Inventor: Thakur, Varun, CH-6330, Cham (CH); Hauck, Manfred, CH-6314, Unterägeri (CH); Gohs, Uwe, D-01129, Dresden (DE)
(74) Representative: Rutz, Peter

(57) **Abstract**

The present invention relates to a composite material consisting of a crosslinked composition. Said composition comprises a 97 to 99 % by weight of a pre-mixture and 1 to 3% by weight of an additive selected from the group consisting of consisting of multifunctional acrylates, multifunctional methacrylates, cyanurates and isocyanurates and substituted vinyl silanes or a mixture thereof. Said pre-mixture comprises 20 to 60 % by weight of a polyolefin rubber and 40 to 80% of mineral fillers. The composite material is used for the preparation of cable insulations.

## Description

The present invention relates to a new composite material which is suitable for insulation of a cable.

Cables are mostly prepared with crosslinked polyethylene. Polyethylene is crosslinked by a chemical reaction using an organic peroxide or silane (US 6,284,178) or by use of an electron beam (US 4,426,497). Currently, in the cable industry, crosslinked polyethylene is prepared mostly by crosslinking using an organic peroxide.

In order to enhance flame-retardancy of polymers, several approaches are known in the literature. Polymers can be made flame-retardant by the addition of halogenated compounds, in particular brominated compounds. However, these materials have several health and environmental issues, which is attributed to the fact that these materials liberate hazardous and corrosive gases like hydrogen halides on burning. The same problem arises with the flame retardant polymer compounds based on PVC.

Several halogen-free flame retardant fillers have been utilized like aluminium trihydroxide Al(OH)₃, and magnesium dihydroxide Mg(OH)₂ etc. However, such inorganic fillers require higher loading in order to fulfill the requirements of flame-retardancy of cable compounds, which in turn deteriorate the processability and mechanical properties of the compound.

In the past few years, nano-fillers like layered double hydroxide (LDH) and montmorillonite (MMT) are also employed in combination with the conventional fillers so as to reach the requirement of flame-retardancy at lower filler loading. For example WO 2006/094250 discloses a cable component with good fire retardant and aging properties, said component being prepared from a polyolefin-based composition and a surface treated metal hydroxide. However, said surface treated metal hydroxide is very expensive.

The problem of the present invention is to provide a cable composition with excellent fire retardant properties and good mechanical properties which may be produced at low costs.

The problem is solved by a composite material according to claim 1 and a method for preparing such a composite material according to claim 9. Further preferred embodiments are subject of dependent claims 2 to 15.

Surprisingly it has been found that the composite material shows excellent flame retardant properties as well as good electrical and mechanical properties, oil resistance, thermal stability and weathering resistance. Due to the high loading of mineral fillers, especially magnesium dihydroxide, the composite material according to the present invention has its flame retardant properties. Magnesium dihydroxide decomposes endothermically on burning and liberates inert gases at temperatures higher than 200°C. There are no hazardous and corrosive gases like hydrogen halides on burning. Despite the high loading of mineral fillers the electrical and mechanical properties, especially insulating and discharge property, elongation at break as well as tensile strength, of the composite material according to the present invention are still excellent. Due to the combination of properties the composite material according to the present invention is suitable for use in cable industry, especially for cables for photovoltaic systems. Further it is no longer needed to add expensive nano-fillers. Therefore, a composite material according to the present invention may be produced at low costs, which is of course a huge advantage.

The unique combination of the components as well as the method for preparing resulted in the excellent properties of the composite material.

The composite material according to the present invention is prepared by cross-linking a composition by treatment with electron beam radiation, said composition comprising 97 to 99 % by weight of a pre-mixture, said pre-mixture comprising 20 to 60 % by weight of a polyolefin rubber and 40 to 80% of a mineral filler; and 1 to 3% by weight of an additive selected from the group consisting multifunctional acrylates, multifunctional methacrylates, cyanurates and isocyanurates and substituted vinyl silanes or a mixture thereof.

The expression polyolefin rubber stands for EPM, i.e. ethylene propylene methylene rubber, or EPDM, i.e. ethylene propylene diene monomer, or a mixture thereof. The polyolefin rubber used for the composite material according to the present invention, is a synthetic rubber. Preferably the polyolefin rubber has a Mooney viscosity in the range of 25 to 80, preferably of 60. Preferably the polyolefin rubber is EPDM.

The ethylene content of the EPDM is 45% to 75%. Preferably the ethylene content is 50% to 55%, most preferably 51%. The diene content of EPDM is between 2.5 % to 12% by weight, preferably 6 to 9% by weight, most preferably 7.7 % by weight.

Especially good results could be obtained with an EPDM rubber having a diene content of 7.7% by weight, a ethylene content of 51% by weight, a density of 0.86 g/cm³, and a Mooney viscosity (ML₁₊₄ at 125°C) of 60 (Buna EP G 6850 of Lanxess).

The expression mineral filler stands for modified and unmodified compounds which having flame retardant properties. Unmodified compounds are for example magnesium dihydroxide and aluminium trihydrate or a mixture thereof. Modified compounds are mineral fillers with a modified surface such as magnesium hydroxide treated with a special vinyl silane coating or nano fillers such as LDH (layered double hydroxide) or surface modified MMT (montmorillonite). Preferably, such modified compounds are present only in small amounts, that is, less than 15% by weight, preferably less than 10% by weight of the total mineral filler content, in order to obtain an inexpensive product. However, it is also possible to produce a composite material having excellent flame retardant properties in the absence of such modified compounds. In a preferred embodiment the mineral filler is magnesium dihydroxide.

Modified compounds have typically a specific surface area of 8.0 to 12.0 m²/g, preferably 9.0 to 11.0 m²/g, and a particle size of d₁₀µm of 0.3 to 50, d₅₀µm of 0.65 to 0.95 and d₉₀µm 1.4 to 1.8.

Unmodified compounds have a particle size of d₁₀µm of 0.35 to 0.70, d₅₀pm of 0.8 to 1.1 and d₉₀µm 1.4 to 2.4 and a specific surface area of 4.0 to 11 m²/g. Good results could be obtained with a magnesium dihydroxide having a particle size of d₁₀pm of 0.35 to 0.55, d₅₀µm of 0.8 to 1.1 and d₉₀µm 1.4 to 2.4 and a specific surface area of 7.0 to 9.0 m²/g (Magnifin H-7 supplied by Albe Marle). Alternatively, a magnesium dihydroxide having a particle size of d₁₀µm of 0.30 to 0.50, d₅₀µm of 0.65 to 0.95 and d₉₀µm 1.4 to 1.8 and a specific surface area of 9.0 to 11.0 m²/g showed good results as well(Magnifin H-10 supplied by Albe Marle).

Before adding the additive, a pre-mixture comprising the polyolefin rubber and the mineral filler is formed. The pre-mixture comprises 20 to 60% by weight, preferably 30 to 50% by weight and most preferably 40% by weight EPDM and 40 to 80 % by weight, preferably 50 to 70 % by weight, most preferably 60 % by weight of the mineral filler. Said pre-mixture is preferably obtained at a temperature between 40 and 60°C, most preferably at 50°C. The two components are preferably mixed for 5 to 15 minutes, most preferably for 10 minutes. The mixture of the two components can be carried out for example on a two-roll mill having a nip gap of 2 - 0.5 mm and at a friction ratio of 1 to 1.5. In said pre-mixing step on the two-roll mill, the polyolefin rubber and the mineral filler are mixed together in order to get a master batch which contains the mineral filler particles dispersed in the polyolefin rubber at macroscopic level. It is essential for obtaining the mechanical and electrical properties of the final product to prepare the above pre-mixture before adding the additive.

In a second step an additive is added to the pre-mixture comprising the polyolefin rubber and the mineral filler. Said additive is selected from the group consisting of multifunctional acrylates, multifunctional methacrylates, cyanurates and isocyanurates and substituted vinyl silanes or a mixtures thereof. Said additives serve as chemical modifiers.

Multifunctional acrylates used as additives in the composite material according to the present invention are diacrylates, triacrylates, and tetraacrylates. Examples of multifunctional acrylates are polyethylene glycol diacrylate, trimethylolpropane triacrylate, ditrimethylol propane tetraacrylate, diethylene glycol diacrylate, ethoxylated bisphenol A diacrylate, 1,6 hexanediol diacrylate, neopentyl glycol diacrylate, propoxylated neopentyl glycol diacrylate, tetraethylene glycol diacrylate, triethylene glycol diacrylate, tripropylene glycol diacrylate, ethoxylated trimethylolpropane triacrylate, propoxylated glyceryl triacrylate, tris (2-hydroxyethyl) isocyanurate triacrylate, pentaerythritol triacrylate and pentaerythritol tetraacrylate, preferably dipropylene glycol diacrylate, trimethlyol propane triacrylate, ditrimethylol propane tetraacrylate.

Multifunctional methacrylates used as additives are dimethacrylates, trimethacrylates, and tetramethacrylates. Examples for multifuctional methacrylates are ethyleneglycol dimethacrylate, diethyleneglycol dimethacrylate, triethyleneglycol dimethacrylate, 1,3-butanediol dimethacrylate, 1,6-hexanediol dimethacrylate neopentylglycol dimethacrylate and trimethylolpropane trimethacrylate.

Cyanurates and isocyanurates used as additives in the composite material according to the present invention are for example triallyl cyanurate, triallyl isocyanurate.

Substitutes vinyl silanes used as additives in the composite material according to the present invention are vinyl silanes with different types of substituent group, such as trimethoxy vinyl silane, triethoxy vinyl silane and vinyl tris (2-methoxy ethoxy) silane and acryloxy methacryloxy silanes.

97 to 99% by weight, preferably 98% by weight, of the pre-mixture and 1 to 3 % by weight, preferably 2% by weight of the additive(s) are mixed in an internal mixer at a temperature of 155 to 175°C until a homogenous composition is obtained. Typically, the components have to be mixed for about 5 minutes at a rotor speed of about 60 rpm.

The resulting composition of polyolefin rubber, mineral filler and additive is compression-molded. The compression molding process involves placing the mixture in the cavity of a mold that has a desired shape. The mold is then closed and held at a high pressure. Typically, the pressure is 100 to 180 kN, preferably 150kN, the temperature is 140°C to 180°C, preferably 160°C and the time is 5 to 10 minutes, preferably 7 minutes. The composition hardens into the shape of the mold. The hardened product has a high density, because the pressure during molding compacts the mixture, allowing intimate contact between polyolefin rubber, mineral filler and additive.

Alternatively the resulting composition of polyolefin rubber, mineral filler and additive is extruded or injection-molded.

The hardened shaped product is irradiated in air by an electron beam accelerator. Optimal irradiation doses are between 25 kGy and 200 kGy for a sample of 2 mm thickness. Best results could be obtained with an irradiation dose of 100 kGy. Preferably the irradiation dose, that is the treatment with electrons, is carried out in two passes of 50 to 100 kGy per pass, most preferably 50 kGy.

In one preferred embodiment the additive is a mixture of a diacrylate, a triacrylate and a tetraacrylate, preferably in a ratio 1:1:1 by weight. Said additive mixture is added to a pre-mixture comprising 40% EPDM (having a Mooney viscosity of 60, a diene content of 7.7% by weight and an ethylene content of 51% by weight) and 60% magnesium dihydroxide. After carrying out the above procedure, a composite material having good mechanical properties, especially tensile strength and elongation at break.

In a further preferred embodiment the additive is an acrylate, preferably dipropylene glycol diacrylate, trimethlyol propane triacrylate or ditrimethylol propane tetraacrylate. Said additive is added to a pre-mixture comprising 40% EPDM ((having a Mooney viscosity of 60, a diene content of 7.7% by weight and an ethylene content of 51% by weight)and 60% magnesium dihydroxide. After carrying out the above procedure, a composite material having a high oil resistance combined with good electrical and mechanical properties is obtained.

In a further preferred embodiment the additive is a substituted vinyl silane, preferably trimethoxy vinyl silane, triethoxyl vinyl silane or vinyl tris (2-methoxy ethoxy silane). Said additive is added to a pre-mixture comprising 40% EPDM (having a Mooney viscosity of 60, a diene content of 7.7% by weight and an ethylene content of 51% by weight) and 60% magnesium dihydroxide. After carrying out the above procedure a composite material having excellent flame retardancy as well as mechanical properties, especially a high tensile strength, is obtained.

In a further preferred embodiment the additive is cyanurate or an isocyanurate, preferably triallyl cyanurate or triallyl isocyanurate. Said additive is added to a pre-mixture comprising 40% EPDM (having a Mooney viscosity of 60, a diene content of 7.7% by weight and an ethylene content of 51% by weight) and 60% magnesium dihydroxide. After carrying out the above procedure a composite material having excellent mechanical properties, especially a high elongation at break value, is obtained.

The composite material according to the present invention may be used as base material for preparing a cable or a covering layer with electrical insulation properties. The insulator may take the form of a single layer or several layers of composite material, such as 2 or 3 layers or more.

The composite material according to the present invention may be used for power cables in general, especially for cables in photo voltaic systems and wind turbines as well as in those applications, where oil and flame resistance is required along with excellent mechanical properties such as automobiles cables and industrial cables.

In a further embodiment of the present invention it is also possible to produce a semi-conducting shield from the composite material according to the present invention. In order to produce a semi-conducting shield it is necessary to incorporate conductive particles into the composite material. These conductive particles are generally provided by particulate carbon black. Said conductive particles have to be added before carrying out the compression molding process.

In a further embodiment it is possible to add further additives such as antioxidants (such as hindered phenolic antioxidants), ultraviolet absorbers (such as carbon black itself and benzophenone derivatives), plasticizers (such as paraffinic oils, naphthenic oils) and colorants depending on the applications and costumer needs.

### Examples:

### Example 1: Preparation of a pre-mixture comprising EPDM and magnesium dihydroxide

160 g EPDM (Buna EP G 6850) with ethylidene norbornene (ENB) content 7.7 % by weight; ethylene content 51% by weight; Mooney viscosity, ML (1+4) at 125°C, 60; specific gravity 0.86 g/cm3; (supplied by Lanxess Deutschland GmbH, Leverkusen, Germany) were mixed with 240 g magnesium dihydroxide with a density of 2.4 g/cm³ and a specific surface area (BET) of 7.0-9.0 (Magnifin H-7) (supplied by Albe Marle) on a two roll mill (Polymix 110 1) (friction ratio 1:1.25, nip gap 2-0.5 mm) at 50°C over 10 minutes.

### Example 2: Preparation of a pre-mixture comprising EPDM and a modified magnesium dihydroxide (Magnifin H-10A)

160 g EPDM (Buna EP G 6850) with ethylidene norbornene (ENB) content 7.7 % by weight; ethylene content 51% by weight; Mooney viscosity, ML (1+4) at 125°C, 60; specific gravity 0.86 g/cm3; (supplied by Lanxess Deutschland GmbH, Leverkusen, Germany) were mixed 240 g magnesium dihydroxide with a density of 2.4 g/cm³ and a specific surface area (BET) of 9.0-11.0 (Magnifin H-10A) (supplied by Albe Marle) on a two roll mill (Polymix 110 1) (friction ratio 1:1.25, nip gap 2-0.5 mm) at 50°C over 10 minutes.

### Example 3: Preparation of a composition comprising the pre-mixture according to Example 1 and ditrimethylolpropane diacrylate

60 g of the pre-mixture of EPDM and magnesium dihydroxide and 2 g ditrimethylolpropane diacrylate were charged in an internal mixer (Haake Rheomix) and mixed for 5 minutes at 165°C and at a root speed of 60 rpm.

The resulting mixture of EPDM, magnesium dihydroxide and ditrimethylolpropane diacrylate was then compression molded at 150kN and at 160°C for 7 minutes.

### Example 4: Preparation of a composition comprising the pre-mixture according to Example 1 and trimethylol propane triacrylate

60 g of the pre-mixture of EPDM and magnesium dihydroxide and 2 g trimethylol propane triacrylate were charged in an internal mixer (Haake Rheomix) and mixed for 5 minutes at 165°C and at a root speed of 60 rpm.

The resulting mixture of EPDM, magnesium dihydroxide and trimethylol propane triacrylate was then compression molded at 150kN and at 160°C for 7 minutes.

### Example 5: Preparation of a composition comprising the pre-mixture according to Example 1 and ditrimethylol propane tetraacrylate

60 g of the pre-mixture of EPDM and magnesium dihydroxide and 2 g ditrimethylol propane tetraacrylate were charged in an internal mixer (Haake Rheomix) and mixed for 5 minutes at 165°C and at a root speed of 60 rpm.

The resulting mixture of EPDM, magnesium dihydroxide and ditrimethylol propane tetraacrylate was then compression molded at 150kN and at 160°C for 7 minutes.

### Example 6: Preparation of a composition comprising the pre-mixture according to Example 1 and vinyl tris (2-methoxyethoxy)silane

60 g of the pre-mixture of EPDM and magnesium dihydroxide and 2 g vinyl tris (2-methoxyethoxy)silane (GF 58) were charged in an internal mixer (Haake Rheomix) and mixed for 5 minutes at 165°C and at a root speed of 60 rpm.

The resulting mixture of EPDM, magnesium dihydroxide and vinyl tris (2-methoxyethoxy)silane was then compression molded at 150kN and at 160°C for 7 minutes.

### Example 7: Preparation of a composition comprising the pre-mixture according to Example 1 and triallyl cyanurate

60 g of the pre-mixture of EPDM and magnesium dihydroxide and 2 g triallyl cyanurate were charged in an internal mixer (Haake Rheomix) and mixed for 5 minutes at 165°C and at a root speed of 60 rpm.

The resulting mixture of EPDM, magnesium dihydroxide and TAC was then compression molded at 150kN and at 160°C for 7 minutes.

### Example 8: Irradiation of the samples

The molded samples obtained in Examples 2 to 6 were irradiated by an electron beam accelerator at in two passes of 50 kGy each. The electron treatment was carried out in air and at room temperature.

| | EPD M (g) | Mg(OH)₂ (g) | D₁-TMP-d₁-acetate (g) | D₁-TMP-triacetat e (g) | D₁-TMP-tetraacrylat e (g) | GF58 (g) | TAC (g) |
|---|---|---|---|---|---|---|---|
| Sample 1 (Example 3) | **24** | **36** | **2** | - | - | - | - |
| Sample 2 (Example 4) | **24** | **36** | - | **2** | - | - | - |
| Sample 3 (Example 5) | **24** | **36** | - | - | **2** | - | - |
| Sample 4 (Example 6) | **24** | **36** | - | - | - | **2** | - |
| Sample 5 (Example 7) | **24** | **36** | - | - | - | - | **2** |

### Characterization

Mechanical properties including tensile strength at break and relative elongation at break were determined according to DIN EN ISO 527-2/S2/200 using a Zwick-Roell tensile tester.

The composite material according to the present invention was dipped in the oil IRM 903 oil heated at 100°C for 4 days. After dipping, the mechanical properties of the rubber sheet in a swollen state was measured and shown in Table 1 as % change.

**Table 1**

| | Before oil test | | After oil test | |
|---|---|---|---|---|
| Sample | Tensile strength (MPa) | Elongation at break (%) | Tensile strength (Mpa) | Elongation at break (%) |
| Sample 3 (with DTMPTA) | 9.5 | 317 | 5.3 | 193 |
| Sample 4 (with GF 58) | 11.3 | 302 | 5.3 | 185 |
| Sample 5 (with TAC) | 4.5 | 842 | 1.8 | 329 |

Electrical properties (insulating property, dielectric property and discharge property) were evaluated as follows:

### a) Dielectric breakdown test (ISO NF EN 60156)

Insulation with a wall thickness 0.4 mm -> 2000 V AC
Sample 3 passed the test
Sample 4 passed the test
Sample 5 passed the test

Insulation with a wall thickness > 0.4 mm -> 2500 V AC
Sample 3 passed the test
Sample 4 passed the test
Sample 5 passed the test

### b) Insulation resistance test (at 10¹⁰Ω at 80°C)

Sample 3 passed the test
Sample 4 passed the test
Sample 5 passed the test

### c) Continuous temperature resistance (20'000 hours at 90°C according to DIN IEC 60216)

Sample 3 passed the test
Sample 4 passed the test
Sample 5 passed the test

### d) Volume Resistivity at 80°C > 10¹⁰Ωcm (according to DIN VDE 0472 part 502 and test according to HD 21.2 S3, paragraph 2.4)

Sample 3 passed the test
Sample 4 passed the test
Sample 5 passed the test

### e) DC resistance at 80°C for 10 day at 230V (HD 21.253)

Sample 3 passed the test
Sample 4 passed the test
Sample 5 passed the test

### f) High voltage test in water for 1 hour at 20°C (HD 21.2 page 3, paragraph 2.3)

Wall thickness 0.4 mm -> 2000 V AC
Sample 3 passed the test
Sample 4 passed the test
Sample 5 passed the test

Wall thickness > 0.4 mm -> 2500 V AC
Sample 3 passed the test
Sample 4 passed the test
Sample 5 passed the test

## Claims

1. Composite material consisting of a crosslinked composition, said composition comprising
97 to 99 % by weight of a pre-mixture, said pre-mixture comprising 20 to 60 % by weight of a polyolefin rubber and 40 to 80% of a mineral filler; and
1 to 3% by weight of an additive selected from the group consisting of multifunctional acrylates, multifunctional methacrylates, cyanurates and isocyanurates and substituted vinyl silanes or a mixture thereof.

2. Composite material according to claim 1, wherein the pre-mixture comprises 30 to 50 % by weight of a polyolefin rubber and 30 to 70% of a mineral filler.

3. Composite material according to any of the preceding claims, comprising
98 % by weight of a pre-mixture of 40% by weight of the polyolefin rubber and 60% by weight of a mineral filler; and
2% weight of an additive selected from the group consisting of multifunctional acrylates, multifunctional methacrylates, cyanurates and isocyanurates and substituted vinyl silanes or a mixture thereof.

4. Composite material according to any of the preceding claims, wherein the polyolefin rubber is ethylene propylene diene methylene rubber (EPDM) or ethylene propylene methylene rubber (EPM).

5. Composite material according to any of the preceding claims, wherein mineral fillers are selected from the group of magnesium dihydroxide and modified magnesium dihydroxide or a mixture thereof, preferably of magnesium dihydroxide.

6. Composite material according to any of the preceding claims, wherein the additive is a multifunctional acrylate or a multifunctial methacrylate, preferably a diacrylate, a triacrylate or a tetraacrylate, most preferably dipropylene glycol diacrylate, trimethlyol propane triacrylate, ditrimethylol propane tetraacrylate.

7. Composite material according to claims 1 to 5, wherein the additive is a substituted vinyl silane, preferably trimethoxy vinyl silane, triethoxyl vinyl silane or vinyl tris (2-methoxy ethoxy silane.

8. Composite material according to claims 1 to 5, wherein the additive a cyanurate or an isocyanurate, preferably triallyl cyanurate or triallyl isocyanurate.

9. Method for preparing a composite material according to 1 to 8 by
(a) Mixing the polyolefin rubber and the mineral filler at temperature between 40 and 60°C obtaining a pre-mixture of the polyolefin rubber and the mineral filler;
(b) Adding an additive selected from the group consisting of multifunctional acrylates, multifunctional methacrylates, cyanurates and isocyanurates and substituted vinyl silanes or a mixture thereof to the pre-mixture of step (a) while mixing and at a temperature of 155 to 175°C
(c) Compression molding, extruding or injection molding of the composition of step (b) to a product with a desired shape,
(d) Treating the product of step (c) with electrons at 25 to 200 kGy at room temperature.

10. Method according to claim 9, wherein the treatment with electron is carried out at 100 kGy.

11. Method according to claim 10 wherein the treatment with electrons is carried out in two passes of 50 to 100 kGy per pass, preferably 50 kGy per pass.

12. Use of the composite material as claimed in any one of claims from 1 to 8 as a base material for preparing a cable or a covering layer with electrical insulation properties.

13. Power cable comprising the composite material according to claim 1 to 8.

14. Multilayer power cable comprising the composite material according to claims 1 to 8 in an insulating layer, a semi-conducting layer or a sheath layer.

15. Composite material obtained by the method according to claims 9 to 11.
